# FASCICULE DE BREVET EUROPEEN

(11) **EP 0 988 458 B1**
(45) Date de publication et mention de la délivrance du brevet: **09.07.2003**
(21) Numéro de dépôt: 99914596.4
(22) Date de dépôt: 16.04.1999
(51) Int. Cl.: F16B 5/06

(54) **AGRAFE**
KLAMMERANORDNUNG
BINDING CLIP

(30) Priorité: 17.04.1998 FR 9804823
(43) Date de publication de la demande: 29.03.2000
(73) Titulaire: Eurostyle (S.A.S.), 91370 Verrières le Buisson (FR)
(72) Inventeur: GUYOT, Robert, F-36000 Châteauroux (FR)
(74) Mandataire: Viard, Jean
(86) Numéro de dépôt international: FR9900896
(87) Numéro de publication internationale: WO99054633

(56) Documents cités:
- DE-A- 3 905 688
- FR-A- 2 489 900
- US-A- 3 852 849
- US-A- 4 701 984
- US-A- 5 542 158

## Description

La présente invention a pour objet une agrafe intégrée, destinée en particulier, mais non exclusivement, à la fixation de pièces en matière thermoplastique munies de telles agrafes sur des pièces métalliques, notamment dans la construction automobile

Traditionnellement, de telles fixations sont réalisées au moyen d'éléments discrets rapportés tels que des rivets, des agrafes en matière plastique, ou des vis dont le filet s'engage dans un trou ou ajour du support et dont la tête emprisonne la pièce en plastique à fixer. Si un tel assemblage est facilement démontable, il est coûteux parce qu'il conduit à réaliser des outillages complémentaires. De plus, cette fixation par éléments rapportés, nécessite un temps de main d'oeuvre important.

Des agrafes indépendantes pouvant réunir deux pièces ont déjà été proposées.

US-A-4 701 984 décrit une agrafe en matière plastique destinée à fixer un circuit imprimé à l'intérieur d'un boîtier métallique. Le corps comprend une partie de fixation destinée à être introduite dans une ouverture polygonale et une partie de maintien qui écarte le circuit imprimé de la paroi du boîtier. Celui-ci est ainsi pincé entre la tête et la partie de maintien.

Dans US-A-5 542 158 les deux pièces à réunir sont assemblées au moyen d'un ressort métallique encliqueté dans un logement flexible et qui presse latéralement sur ledit logement.

La présente invention a pour objet de pallier les inconvénients mentionnés ci-dessus et de permettre une fixation instantanée, en aveugle, pouvant se démonter sans destruction ni altération des surfaces en contact avec le support métallique. Elle peut aussi être mise en oeuvre pour le clipsage de pièces sur des supports non métalliques présentant des arêtes agressives.

Un second objet de l'invention est de permettre une fixation étanche d'une pièce thermoplastique sur un support.

Selon l'invention, l'agrafe intégrée en matière plastique de fixation d'une pièce sur un support notamment métallique comprend les caractéristiques de la revendication 1.

De préférence, l'agrafe intégrée de fixation d'une pièce thermoplastique notamment sur une pièce métallique est intégrée à ladite pièce et vient directement de moulage. De ce fait, l'agrafe intégrée est totalement recyclable sans souci de démontage d'un élément rapporté pour un tri sélectif. Les pièces thermoplastiques, notamment pour l'automobile, sont réalisées par injection et les agrafes peuvent ainsi être obtenues directement au prix d'une légère complication du moule. L'invention évite ainsi de prévoir des logements d'agrafe avec des clips rapportés qui engendrent un coût d'assemblage.

La souplesse de la matière plastique permet l'introduction du nez de l'agrafe intégrée dans l'orifice et l'escamotage des becs en saillie jusqu'à ce que l'agrafe occupe une position prédéfinie dans laquelle la tôle ou plus généralement le support est pincé entre le corps de l'agrafe intégrée et les becs d'encliquetage.

Selon un mode de réalisation de l'invention, une entretoise relie les deux ailes du nez et les parois latérales du corps en formant une semelle.

Selon un autre mode de réalisation de l'invention, deux nervures d'appui latérales servent de butée de l'agrafe intégrée sur le support.

Les ailes constituant le nez du clip sont d'épaisseur croissante et par suite souples et assurent le montage et le démontage dans les ajours, avec bord rabattu, directement dans la tôle sans détérioration de la qualité et de l'état des becs d'enclipsage. On sait, en effet, que les bords des découpes sont, d'une manière générale, coupants et agressifs et que par suite, une introduction directe de l'agrafe intégrée provoque une altération notamment des becs d'enclipsage de sorte que l'étanchéité et la qualité de la fixation se détériorent après quelques montages et démontages.

Le support avec ses bords rabattus permet de modifier la position des zones agressives. Les ailes du nez en "V" peuvent ainsi glisser sur les bords du support sans être agressés et permettent à celui-ci de prendre sa position définitive.

Lesdites pièces ne sont démontées qu'occasionnellement en fonction de problèmes particuliers. La matière thermoplastique constituant l'agrafe intégrée est donc choisie de manière à pouvoir subir sans dommage une vingtaine de montages et de démontages.

D'autres avantages de la présente invention apparaîtront au cours de la description qui va suivre d'un mode particulier de réalisation, en regard des figures qui représentent:
- les figures 1 à 4, les positions des différentes parties de l'agrafe intégrée lors de son introduction et sa fixation dans la découpe;
- la figure 5 représente l'agrafe lors du démontage;
- la figure 6, une vue en perspective d'une agrafe intégrée selon l'invention.

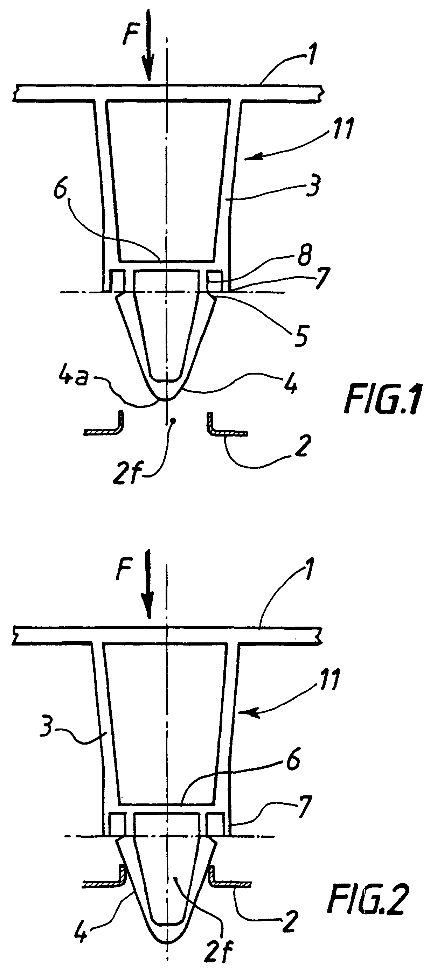

Sur les figures 1 à 6, les mêmes références désignent les mêmes éléments. L'agrafe intégrée a pour but de fixer une pièce 1, par exemple en matière thermoplastique, sur un support 2, par exemple en métal, présentant une découpe 2f qui, dans l'exemple représenté, est rectangulaire. A partir de la pièce 1, fait saillie, en direction du support 2, une agrafe intégrée désignée d'une manière générale par la référence 11 comprenant un corps creux constitué de deux faces obliques trapézoïdales, le corps 3 se terminant à sa partie avant par une semelle 6 reliant les deux faces du corps 3 à partir de laquelle fait saillie un nez 4 en forme de V de largeur réduite par rapport à la largeur des ailes du corps 3.
A la partie supérieure du nez 4, sont formés latéralement des becs d'enclipsage 5 constitués par des parois sensiblement triangulaires formant une zone d'encliquetage 8 directement au-dessus des becs 5. Le nez 4 en forme de "V" sert de centreur et permet de piloter l'agrafe jusqu'à la position représentée sur la figure 2 et le montage en aveugle de la pièce sans avoir à rechercher la position convenable.

La figure 1 représente la pièce 1 et le support 2 avant pénétration de l'agrafe intégrée 11 dans la découpe ou ajour 2f dans la direction de la flèche F. On supposera, dans ce qui suit, que le support reste fixe alors que l'agrafe intégrée se déplace par rapport au support. Il est bien entendu qu'un mouvement relatif entre les pièces est suffisant.

Sur la figure 2, le nez 4a a pénétré dans le trou 2f et les ailes du nez 4 sont en contact avec les bords de la tôle 2.

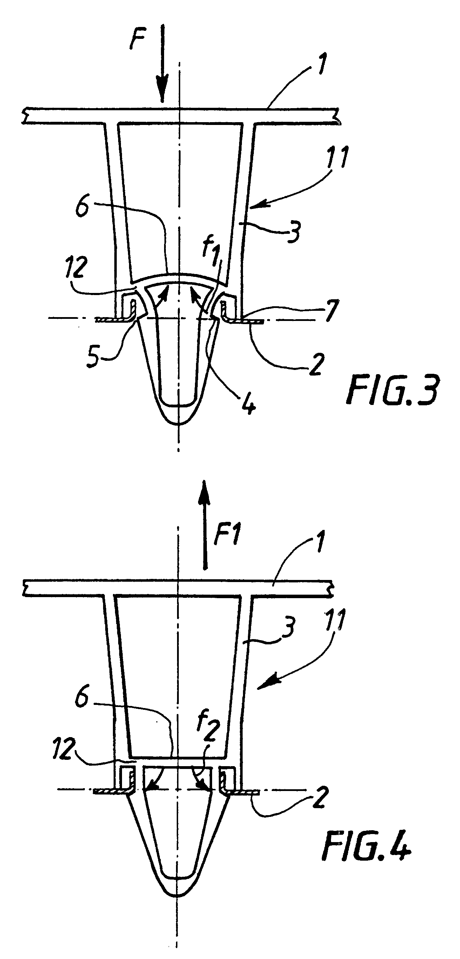

Le mouvement se poursuivant (figure 3), le nez 4 descend à l'intérieur du trou 2f, ce qui comprime latéralement les deux becs 5 de l'agrafe intégrée. Sous l'effort de montage et la pression exercée par les bords du support 2, symbolisée par les flèches f1, les côtés du nez se déforment vers le centre et la semelle 6 prend une forme bombée dans la direction opposée à la flèche F. Il en résulte un mouvement rotatif, de centre 12, de la jonction du nez 4 et des côtés latéraux du corps 3, qui tend à réduire l'effort F de montage. Dès que les butées 7 du clip ont touché le support 2 ,les efforts de montage sont supprimés sur le nez 4 et celui-ci reprend sa forme initiale par élasticité, emprisonnant le support 2 et la face supérieure dudit support entre la face 5 et la butée 7 du clip. La tenue du clip est assurée par le contact de la butée 7 et de la face 5 sur le support 2 comme cela apparaît sur la figure 4, la résistance à l'extraction étant symbolisée par la flèche F1. Lors d'un effort de traction F1 est exercé sur la pièce, il est transmis par les flancs 3 du corps, il s'en suit un mouvement de rotation de centre 12 qui plaque les becs 5 sur le support 2 et qui augmente la tenue du clip.

Le démontage d'une pièce 1 clipsée se fait dans le sens inverse du précédent, c'est à dire par traction sur la pièce 1 ou sur l'agrafe intégrée 11, l'agrafe intégrée prend successivement les positions représentées sur les figures 4-5-2-1, l'élasticité de la matière permettant de retrouver la configuration de la figure 1 après extraction du nez 4.

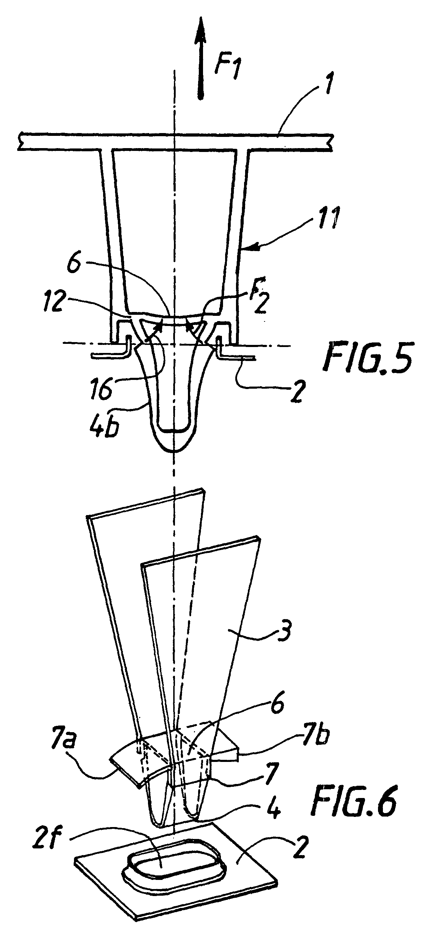

Comme représenté sur la figure 5, lorsque l'effort d'extraction devient trop important la semelle 6 s'arqueboute dans le sens inverse du montage comme indiqué par les flèches f2 et les ailes du nez 4 se déforment, libérant l'ensemble du clip de son support 2.

La figure 6 représente en perspective une agrafe intégrée selon l'invention, la pièce 1 n'étant pas représentée. La découpe 2f du support est rectangulaire et l'on prévoit dans la direction longitudinale de l'agrafe intégrée et de la découpe deux lèvres souples opposées, respectivement 7a et 7b, s'étendant dans le prolongement de la semelle 6, recouvrent toute la surface de l'ajour 2f, le montage et le démontage se faisant comme précédemment décrit.

Bien que la description qui précède ait été donnée en prenant comme exemple une agrafe intégrée à deux ailes destinée à pénétrer dans une découpe rectangulaire avec bord rabattu d'un support, il va de soi que la même structure peut être utilisée avec une agrafe à section carrée ou circulaire.

## Revendications

1. Agrafe (11) en matière plastique de fixation d'une pièce (1) sur un support (2) notamment métallique, qui est intégrée à la pièce (1) et comprend un corps creux (3) terminé à l'une de ses extrémités par un nez (4), de dimensions réduites par rapport au corps (3), au moins un bec d'enclipsage (5) sensiblement triangulaire faisant saillie à partir du nez (4) pour définir une zone d'enclipsage (8) destinée à recevoir le bord du support (2) par élasticité et à maintenir l'agrafe (11) intégrée sur le support (2).

2. Agrafe (11) selon la revendication 1, **caractérisée en ce que** le corps (3) est prolongé par des nervures (7) servant de butée de l'agrafe intégrée sur le support (2).

3. Agrafe (11) selon la revendication 2, **caractérisée en ce que** les nervures (7) assurent le maintien du support (2) sur les becs d'encliquetage (5) du nez (4).

4. Agrafe (11) selon l'une des revendications 1 à 3, **caractérisée en ce que** le nez (4) fait saillie à partir d'une semelle transversale (6) reliée au corps (3) de plus forte épaisseur.

5. Agrafe (11) selon la revendication 4, **caractérisée en ce que** le nez est rattaché à la semelle transversale (6) par des côtés latéraux de largeur maximale inférieure à la largeur des parties latérales du corps (3) rattachées à la semelle (6).

6. Agrafe (11) selon l'une des revendications 1 à 5, **caractérisée en ce que** le corps (3) est constitué par deux côtés latéraux trapézoïdaux, le nez (4) présentant une forme en "V" dont les ailes portent chacune un bec d'enclipsage (5).

7. Agrafe (11) selon l'une des revendications 1 à 6, **caractérisée en ce que** le corps (3) présente une largeur, supérieure à la largeur du nez (4).

8. Agrafe (11) selon l'une quelconque des revendications 1 à 7, **caractérisée en ce que** le support (2) comprend un ajour (2f) présentant un bord périphérique dressé dans lequel pénètre l'agrafe intégrée (11).

9. Agrafe (11) selon les revendications 3 à 8, **caractérisée en ce que** la semelle (6) est prolongée dans l'axe du clip de deux lèvres souples en saillie (7a, 7b) venant en appui sur le support (2) et assurant une étanchéité.

10. Pièce thermoplastique incluant au moins une agrafe intégrée selon l'une quelconque des revendications précédentes, **caractérisée en ce que** l'agrafe intégrée (11) est moulée par injection avec la pièce thermoplastique (1).

## Patentansprüche

1. Klammmeranordnung (11) aus Kunststoff, zur Befestigung eines Stücks (1) auf einer insbesondere metallischen Halterung (2), die in das Stück (1) integriert ist und einen Hohlkörper (3) aufweist, der an einem Ende mit einer in bezug auf den Körper (3) verkleinerte Dimensionen aufweisenden Nase (4) abschliesst, wobei mindestens eine hauptsächlich dreieckige Rastnase (5) ausgehend von der Nase (4) vorsteht, um einen zum elastischen Empfang des Randes der Halterung (2) bestimmten Einrastbereich (8) zu definieren und um die Klammeranordnung (11) in der Halterung (2) integriert zu halten.

2. Klammeranordnung (11) gemäss Anspruch 1, **dadurch gekennzeichnet, dass** der Körper (3) durch Stege (7) verlängert ist, die als Anschlag für die in der Halterung (2) integrierte Klammeranordnung dienen.

3. Klammeranordnung (11) gemäss Anspruch 2, **dadurch gekennzeichnet, dass** die Stege (7) die Stabilität der Halterung (2) auf den Rastnasen (5) der Nase (4) sicherstellen.

4. Klammeranordnung (11) gemäss einem der Ansprüche 1 bis 3, **dadurch gekennzeichnet, dass** die Nase (4) von einer Quersohle (6) vorsteht, die mit dem eine grössere Dicke aufweisenden Körper (3) verbunden ist.

5. Klammeranordnung (11) gemäss Anspruch 4, **dadurch gekennzeichnet, dass** die Nase mit der Quersohle (6) durch seitliche Schenkel, deren maximale Breite kleiner als die Breite der mit der Sohle (6) verbundenen Seitenteile des Körpers (3) ist, verbunden ist.

6. Klammeranordnung (11) gemäss einem der Ansprüche 1 bis 5, **dadurch gekennzeichnet, dass** der Körper (3) aus zwei trapezoidalen Seitenschenkeln besteht, und die Nase (4) eine "V" Form aufweist, dessen Schenkel jeweils eine Rastnase (5) aufweisen.

7. Klammeranordnung (11) gemäss einem der Ansprüche 1 bis 6, **dadurch gekennzeichnet, dass** der Körper (3) eine Breite aufweist, die grösser als die Breite der Nase (4) ist.

8. Klammeranordnung (11) gemäss einem der Ansprüche 1 bis 7, **dadurch gekennzeichnet, dass** die Halterung (2) mit einem Durchbruch (2f) versehen ist, der einen aufrechten Umfangsrand aufweist, in welchen die integrierte Klammeranordnung (11) eindringt.

9. Klammeranordnung (11) gemäss einem der Ansprüche 3 bis 8, **dadurch gekennzeichnet, dass** die Sohle (6) in der Achse der Klammer durch zwei elastische, vorstehende Lippen (7a, 7b) verlängert ist, die sich auf der Halterung (2) abstützen und eine Dichtigkeit sicherstellen.

10. Thermoplastisches Stück mit mindestens einer integrierten Klammeranordnung gemäss einem der vorstehenden Ansprüche, **dadurch gekennzeichnet, dass** die integrierte Klammeranordnung (11) im Spritzgruss mit dem thermoplastischen Stück (1) hergestellt ist.

## Claims

1. Binding clip (11) of plastic material for fixing a piece (1) onto a support (2), typically of metal, which is integrated to the piece (1) and comprises a hollow body (3) terminated at one of its ends by a nose (4), of dimensions that are reduced with respect to the body (3), at least one substantially triangular snapping beak (5) protruding from the nose (4) for defining a snapping area (8) provided to receive the edge of the support (2) by elasticity and to maintain the integrated binding clip (11) onto the support (2).

2. Binding clip (11) according to claim 1, **characterized in that** the body (3) is extended by ribs (7) used as abutments for the integrated binding clip on the support (2).

3. Binding clip (11) according to claim 2, **characterized in that** the ribs (7) provide for maintaining the support (2) onto the snapping beaks (5) of the nose (4).

4. Binding clip (11) according to one of claims 1 to 3, **characterized in that** the nose (4) protrudes from a transverse sole (6) connected to the body (3) of a greater thickness.

5. Binding clip (11) according to claim 4, **characterized in that** the nose is connected to the transverse sole (6) via lateral sides of a maximum width smaller than width of the lateral parts of the body (3) connected to the sole (6).

6. Binding clip (11) according to one of claims 1 to 5, **characterized in that** the body (3) is formed by two trapezoidal lateral sides, the nose (4) having a "V" shape with each of the wings thereof carrying a snapping beak (5).

7. Binding clip (11) according to one of claims 1 to 6, **characterized in that** the body (3) has a width which is greater than width of the nose (4).

8. Binding clip (11) according to any one of claims 1 to 7, **characterized in that** the support (2) comprises an opening (2f) having a raised peripheral edge into which the integral binding clip (11) penetrates.

9. Binding clip (11) according to claims 3 to 8, **characterized in that** the sole (6) is extended in axis of the binding clip by two protruding flexible lips (7a, 7b) coming to bear onto the support (2) and providing a tightness.

10. Thermoplastic piece including at least one integrated binding clip according to any one of the preceding claims, **characterized in that** the integrated binding clip (11) is made by injection moulding with the thermoplastic piece (1).
